# EUROPEAN PATENT APPLICATION

(11) **EP 2 055 285 A2**
(43) Date of publication of application: **06.05.2009**
(21) Application number: 08167987.0
(22) Date of filing: 30.10.2008
(51) Int. Cl.: A61G 5/06

(54) **Stairlift**

(30) Priority: 31.10.2007 IT MC20070216
(71) Applicant: Antano Group S.R.L., 06039 Trevi (PG) (IT)
(72) Inventor: Mancinelli, Vincenzo, 06030, VALTOPINA (PG) (IT)
(74) Representative: Baldi, Claudio

(57) **Abstract**

The present invention relates to a stairlift (1) provided with a lateral pair of crawlers (4) actuated by a gear motor (5) and lifted by means of a crawler lift system (7) that comprises at least three oscillating wheels (8A, 8B, 8C) designed to be brought from rest position, in which they are raised from the ground, to working position, in which they rest on the ground.

## Description

The present invention relates to a stairlift.

Stairlifts are generally used to transport bulky and/or heavy packages and objects and/or disabled people on wheelchairs over stairs or ramps.

Stairlifts according to the known art are provided with a pair of lateral crawlers actuated by a gear motor that allow to move the stairlift over flights of stairs or ramps.

Since crawlers cause slow movement and reduce the turning radius, a crawler lift system is provided to move the stairlift on a flat surface, which comprises a pair of oscillating wheels in mutual alignment, which are raised from the ground when the stairlift moves on crawlers, being positioned on the back of the stairlift frame.

"Oscillating wheel" means a wheel fixed to an arm or similar element, which oscillates with respect to an axis passing through the free end of the arm. The passing axis is defined as oscillating axis of the wheel.

In case of a flat surface or manoeuvres, the pair of oscillating wheels is lowered by means of a manoeuvring lever, lifting the crawlers from the ground, although the front ends of the same crawlers are maintained in contact with the ground.

By using the steering situated on the back of the stairlift, the operator overturns the stairlift slightly backwards until the two lateral crawlers are raised from the ground for their entire length, in such a way to move the stairlift on the oscillating wheels only.

Because of the oscillating wheels also steering manoeuvres are possible.

A first drawback is caused by the fact that the in such a position the stairlift can be moved as long as the operator maintains the stairlift partially overturned backwards with a great physical effort that depends on the load.

Another drawback refers to the steering manoeuvres, in which the load is difficult to balance, requiring high skill and attention for the operator.

The purpose of the present invention is to devise a stairlift that provides a simple, inexpensive solution to the drawbacks of known stairlifts.

The foregoing purposes are achieved with a stairlift that comprises a bearing frame, a manoeuvring steering, a pair of lateral crawlers actuated by a gear motor and a crawler lift system comprising a first oscillating wheel and a second oscillating wheel in mutual alignment, in which the crawler lift system also comprises at least a third oscillating wheel in off-axis position with respect to the first oscillating wheel and the second oscillating wheel.

The wheels are designed to be brought from idle position, in which they are raised from the ground, to working position, in which they rest on the ground. In idle position the stairlift rests on crawlers only, while in the working position the stairlift rests on wheels only.

The oscillating axes of the first oscillating wheel and the second oscillating wheel basically coincide, and the oscillating axis of the third oscillating wheel is different from the oscillating axis of the first and second wheel.

All wheels are provided with movement means in order to touch the support surface when the operator wants to use wheels instead of crawlers.

In view of the above, once the crawler lift system has been actuated, that is to say once the three oscillating wheels have been lowered, the crawlers are automatically raised from the ground for their entire length.

As a matter of fact, the presence of the three wheels generates an isostatic support system that automatically stands on three wheels.

Similarly, four or more wheels can be provided, thus generating a hyperstatic system with higher strength.

In this way, not being forced to keep the stairlift in tilted position, the operator is released from doing any physical effort during the movement of the stairlift on a flat surface, and most of all during steering manoeuvres.

The stairlift according to the present invention can therefore be manoeuvred by any operator regardless of physical strength.

Moreover, the stairlift of the invention is easy to use and only slightly more expensive than a stairlift according to the known art.

The preferred embodiment of the present invention illustrated in the enclosed drawings comprises four oscillating wheels. This advantageously increases the stability of the stairlift with a limited number of wheels.

More than four wheels, such as six or a higher number, can be provided if the stairlift is used to lift very heavy weights.

Further characteristics and improvements are the object of the appended claims and subclaims.

The characteristics of the invention and consequent advantages will be more evident following to a detailed description of drawings, whereby:
fig. 1 is a top view of a preferred executive embodiment of the stairlift of according to the present invention;
fig. 2 is a side view of the stairlift of fig. 1;
fig. 3 is a side view of the crawler lift system of the stairlift in ascending-descending configuration according to the present invention;
fig. 4 is a side view of the crawler lift system of the stairlift in manoeuvring configuration on a flat surface according to the present invention;

The illustrated drawings refer to a solution that is especially advantageous in terms of stability and strength, which is provided with four oscillating wheels.

Nevertheless, solutions with a number of oscillating wheels other than four, more precisely three or more wheels, can be devised by the experts of the field without leaving the protection scope and precepts of the present invention.

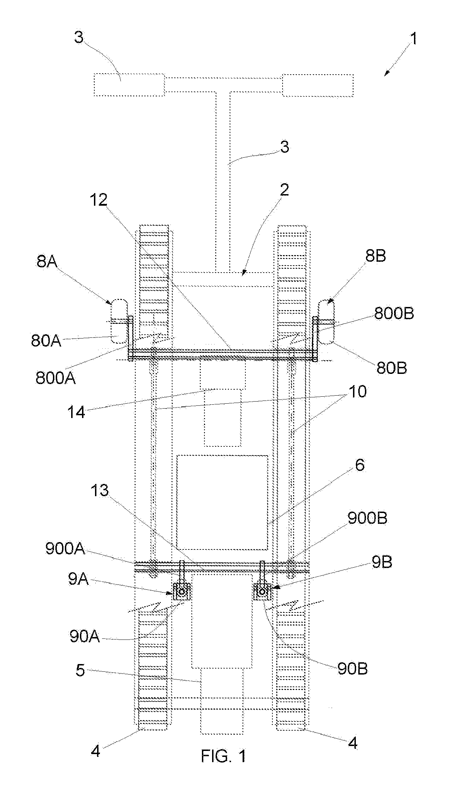

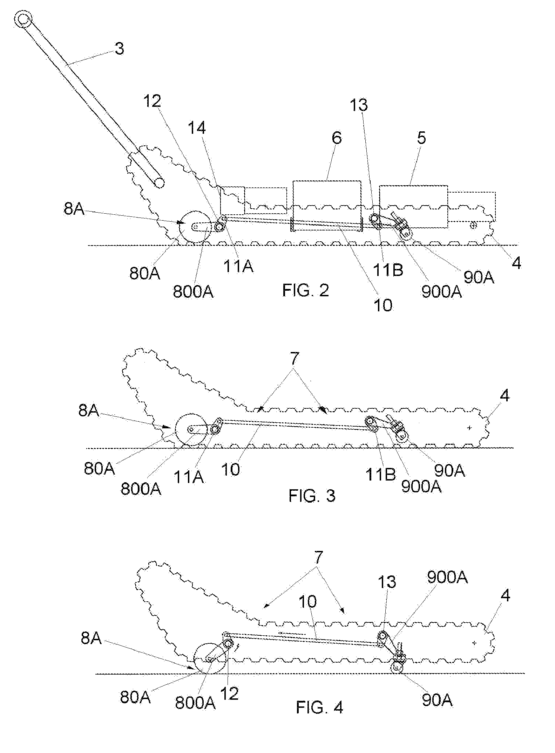

Figure 1 and figure 2 are a top view and a side view of the stairlift according to the executive embodiment with four oscillating wheels of the present invention.

The stairlift (1) comprises a bearing frame (2), a manoeuvring steering (3), a pair of lateral crawlers (4) actuated by a gear motor (5), a battery (6) to power the gear motor (5) and a crawler lift system (7).

The crawler lift system (7) illustrated in the enclosed drawings comprises a first oscillating wheel (8A) and a second oscillating wheel (8B) in mutual alignment, which are positioned near the back side of the frame (2).

The system also comprises a third oscillating wheel (9A) and a fourth oscillating wheel (9B) in mutual alignment, which are positioned near the front side of the frame (2).

The pair of oscillating wheels (8A, 8B) is in off-axis position with respect to the pair of oscillating wheels (9A, 9B), that is to say has a different oscillating axis, and specifically a parallel oscillating axis.

The first and second oscillating wheels (8A, 8B) comprise a first and a second wheel (80A, 80B) and a first and a second connection arm (800A, 800B).

The third and the fourth oscillating wheels (9A, 9B) comprise a third and a fourth wheel (90A, 90B) and a third and a fourth connection arm (900A, 900B).

According to an especially advantageous characteristic illustrated in the enclosed drawings, the third and fourth wheels (90A, 90B) are of swivel type, that is to say free to rotate around a vertical axis, to ensure simple direction changes and high mobility and manoeuvrability.

In view of the above, the stairlift is extremely easy to move, especially during steering.

The four wheels are designed to be lowered, from idle position to working position, and raised, from working position to idle position, simultaneously; the crawler lift system (7) comprises a connection leverage between the pair of oscillating wheels (8A, 8B) on the back side of the frame (2) and the pair of oscillating wheels (9A, 9B) on the front side of the frame (2), in such a way that the lowering of the pair of oscillating wheels (8A, 8B) causes the automatic simultaneous lowering of the pair of oscillating wheels (9A,9B).

The said leverage is formed of a tie-rod (10) and two cranks (11A) and (11B): the first crank (11A) is fixed to a first lift shaft (12) to lift the first and second oscillating wheels (8A, 8B), while the second crank (11 B) is fixed on a second lift shaft (13) to lift the third and fourth oscillating wheels (9A, 9B).

The first and second oscillating wheels (8A, 8B) are fixed to the first lift shaft (12) by means of the first and second connection arm (800A, 800B), while the third and fourth oscillating wheels (9A, 9B) are fixed to the second lift shaft (13) by means of the third and fourth connection arm (900A, 900B).

The crawler lift system (7) of the executive embodiment illustrated in the enclosed drawings is actuated by a gear motor (14) powered by a battery (6).

According to other executive embodiments of the present invention, the crawler lift system (7) is actuated manually, for example by means of a lever or a small wheel preferably provided with a gear train to gear down, known in the state of the art, which allows the operator to raise the stairlift on the wheels without excessive physical effort.

The cross-section of the lift shafts (12, 13) is advantageously round or polygonal, and in particular hexagonal in the illustrated executive embodiment.

Figure 3 is a side view of the crawler lift system (7) of the stairlift (1) in ascending-descending configuration, when the stairlift rests on crawlers.

In this configuration the first and second oscillating wheels (8A, 8B) and the third and fourth oscillating wheels (9A, 9B) are raised from the ground.

Figure 4 is a side view of the crawler lift system (7) of the stairlift (1) in the manoeuvring configuration on a flat surface.

In this configuration the first and second oscillating wheels (8A, 8B) and the third and four oscillating wheels (9A, 9B) are lowered and touch the ground, in such a way to raise the two crawlers (4) from the ground for their entire length.

According to the executive embodiment illustrated in the enclosed drawings, the crawler lift system (7) is actuated by the second gear motor (14) that, after receiving a start signal from a control means, such as a button, starts rotating the first lift shaft (12) in anti-clockwise direction (with reference to the figures). By means of the foregoing leverage the first lift shaft (12) drives the second lift shaft (13) into clockwise rotation.

In this way, the first and second oscillating wheels (8A, 8B) fixed to the first lift shaft (12) by means of the first and second connection arm (800A, 800B), and the third and fourth oscillating wheels (9A, 9B) fixed to the second lift shaft (13) by means of the third and fourth connection arm (900A, 900B), are lowered, touching the ground and protruding downwards with respect to the crawlers, which are raised from the ground or, more generally, from the support surface.

Similarly and inversely, the system is actuated to bring back the wheels in idle position and put the crawlers in contact with the ground.

According to an alternative embodiment not illustrated in the enclosed drawings, the gear motor (14) used to actuate the lift shaft (12) is the same gear motor (5) used to actuate the crawlers (4), for instance with the interposition of one or more toothed wheels for motion transmission.

According to another alternative embodiment not illustrated in the enclosed drawings, a second battery is provided to power the second gear motor (14).

The first and second oscillating wheels (8A, 8B) illustrated in fig. 1, are parallel and aligned, meaning that they have the same oscillating axis and are positioned near the back side of the frame (2).

The third and fourth oscillating wheels (9A, 9B) illustrated in the figure are parallel and positioned near the front side of the frame (2).

The third and fourth wheel (90A, 90B) illustrated in figure 3 are of swivel type.

In this executive embodiment the gear motor (5) is positioned near the front side of the frame (2), the second gear motor (14) is positioned near the back side of the frame (2) and the battery (6) is positioned between the gear motor (5) and the second gear motor (14), being an advantageous arrangement for the optimal distribution of the weight of the stairlift, which is well balanced.

The manoeuvring steering (3) illustrated in the enclosed drawings has a T shape and is provided with two lateral handles (15) at the ends of the horizontal side of the T.

According to a variation not illustrated in the enclosed drawings, the movement of the wheels is controlled by moving the steering, for instance by means of a downward movement of the steering, which actuates the wheels by means of simple gear-down leverage.

According to an equivalent alternative embodiment not illustrated in the enclosed drawings, the oscillating wheels are replaced with up-down translating wheels that are moved by means of a simple vertical translation or basically vertical translation from idle position to working position.

In this case, a common support frame can be provided for the wheels, being for instance a support frame made of metal section on which the wheels are applied.

The frame is moved by a gear motor and makes a vertical translation, or a translation with vertical component, in such a way to bring the wheels from idle position to working position and vice versa.

Additionally, means to lock the wheel support frame in position with respect to the stairlift frame may be provided.

## Claims

1. Stairlift (1) comprising a bearing frame (2), a manoeuvring steering (3), a pair of lateral crawlers (4) actuated by a gear motor (5) and a crawler lift system (7) that comprises a first oscillating wheel (8A) and a second oscillating wheel (8B) in aligned position, stairlift **characterised in that** the crawler lift system (7) also comprises at least a third oscillating wheel (9A) in off-axis position with respect to the first oscillating wheel (8A) and to the second oscillating wheel (8B), the said wheels being designed to be brought from idle position, in which they are raised from the ground, to working position, in which they rest on the ground.

2. Stairlift (1) as claimed in claim 1, **characterised in that** the crawler lift system (7) also comprises a fourth oscillating wheel (9B) in aligned position with the third oscillating wheel (9A).

3. Stairlift (1) as claimed in one or more of the above claims, **characterised in that** the crawler lift system (7) is actuated by at least a second gear motor (14).

4. Stairlift (1) as claimed in claims 1 to 2, **characterised in that** the crawler lift system (7) is actuated by the gear motor (5).

5. Stairlift (1) as claimed in claims 1 to 2, **characterised in that** the crawler lift system (7) is mechanically actuated by a lever or small wheel.

6. Stairlift (1) as claimed in one or more of the above claims, **characterised in that** the crawler lift system comprises a first lift shaft (12) to lift the first and second oscillating wheels (8A, 8B) and a second lift shaft (13) to lift the third and fourth oscillating wheels (9A, 9B).

7. Stairlift (1) as claimed in one or more of the above claims, **characterised in that** the cross-section of the first and second lift shaft (12, 13) is hexagonal.

8. Stairlift (1) as claimed in one or more of the above claims, **characterised in that** the crawler lift system (7) comprises a connection leverage between the pair of oscillating wheels (8A, 8B) positioned on the back side of the frame (2), and the pair of oscillating wheels (9A, 9B) positioned on the front side of the frame (2), in such a way that the lowering of the pair of oscillating wheels (8A, 8B) causes the automatic simultaneous lowering of the pair of oscillating wheels (9A, 9B).

9. Stairlift (1) as claimed in one or more of the above claims, **characterised in that** the leverage comprises a tie-rod (10), a first crank (11A) fixed on the first lift shaft (12) to lift the first oscillating wheel (8A) and the second oscillating wheel (8B), and a second crank (11 B) fixed on the second lift shaft (13) to lift the third oscillating wheel (9A) and the fourth oscillating wheel (9B).

10. Stairlift (1) as claimed in one or more of the above claims, **characterised in that** the first lift shaft (12), driven in anti-clockwise rotation by the second gear motor (14) by means of the said leverage drives the second lift shaft (13) into clockwise rotation.

11. Stairlift (1) as claimed in one or more of the above claims, **characterised in that** the gear motor (5) and the second gear motor (14) are powered by a battery (6).

12. Stairlift (1) as claimed in one or more of the above claims, **characterised in that** the gear motor (5) and the second gear motor (14) are individually powered by a dedicated battery.

13. Stairlift (1) as claimed in one or more of the above claims, **characterised in that** the pair of oscillating wheels (9A, 9B) is of swivel type.

14. Stairlift comprising a bearing frame, a manoeuvring steering, a pair of lateral crawlers actuated by a gear motor and a crawler lift system that comprises a first and a second oscillating wheel in aligned position, stairlift **characterised in that** the crawler lift system also comprises at least a third wheel in off-axis position with respect to the first and second oscillating wheel, the said wheels being designed to be brought from idle position, in which they are raised from the ground, to working position, in which they rest on the ground by means of a basically vertical translation.

15. Stairlift as claimed in claim 14, **characterised in that** it also comprises a fourth wheel aligned with the third wheel.

16. Stairlift as claimed in claim 14 or 15, **characterised in that** the wheels are associated with a common support frame.

17. Stairlift as claimed in claim 16, **characterised in that** the frame is moved by a gear motor and makes a vertical translation, or a translation with vertical component, in such a way to bring the wheels from idle position to working position and vice versa.

18. Stairlift as claimed in claim 17, **characterised in that** means used to lock the wheel support frame in position with respect to the stairlift frame are provided.
